# EUROPEAN PATENT SPECIFICATION

(11) **EP 4 484 850 B1**
(45) Date of publication and mention of the grant of the patent: **21.01.2026**
(21) Application number: 22928519.2
(22) Date of filing: 22.02.2022
(51) Int. Cl.: F24D 17/02, F24D 19/10, F24H 15/148, F24H 15/421, F24H 15/45, F24H 15/262, F24H 15/176, F24H 15/172, F24H 4/02, F24H 15/38, F24H 15/152, F24H 4/04, G06Q 50/06, G06Q 10/04

(54) **HEAT ACCUMULATING SYSTEM AND INFORMATION PROCESSING DEVICE**
WÄRMESPEICHERSYSTEM UND INFORMATIONSVERARBEITUNGSVORRICHTUNG
SYSTÈME D'ACCUMULATION DE CHALEUR ET DISPOSITIF DE TRAITEMENT D'INFORMATIONS

(43) Date of publication of application: 01.01.2025
(73) Proprietor: MITSUBISHI ELECTRIC CORPORATION, Chiyoda-ku Tokyo 100-8310 (JP)
(72) Inventor: KADOWAKI Kimitaka, Tokyo 100-8310 (JP); TANIGAWA Masato, Tokyo 100-8310 (JP); ITO Takuya, Tokyo 100-8310 (JP); NAKAGAWA Hiroyuki, Tokyo 100-8310 (JP); MATSUGAMI Tsukine, Tokyo 102-0073 (JP)
(74) Representative: Witte, Weller & Partner Patentanwälte mbB
(86) International application number: PCT/JP2022/007218
(87) International publication number: WO 2023/161988

(56) References cited:
- JP-A- 2003 106 639
- JP-A- 2011 012 940
- JP-A- 2011 247 513
- JP-A- 2012 172 915
- JP-A- 2012 181 000
- JP-A- 2016 133 228
- JP-A- 2017 219 249
- JP-A- 2020 190 352
- JP-A- 2021 076 301
- JP-B2- 5 121 882

## Description

### Technical Field

The present disclosure relates to a thermal storage system including a water heater and an information processing apparatus to be connected to the water heater.

### Background Art

A water heater of a heat pump type has a low delivery capacity per unit time, and thus hot water needs to be accumulated in advance in a reservoir such as a tank. To meet this need, the accumulation of hot water in the tank in the water heater is completed before the start of actual usage of hot water by a user to avoid occurrences of a shortage of hot water supply while the user is using hot water. When there is a long time lag between when the user starts using hot water and when hot water has been accumulated, the amount of heat dissipated from the hot water accumulated in the tank is large, leading to a drop in the delivery efficiency.

An operation plan creating system configured to create an operation plan for a water heater has been proposed to reduce charges for heat and electricity for the water heater (for example, refer to Patent Literature 1). Patent Literature 1 discloses an operation plan creating apparatus including acquiring circuitry and delivery schedule creating circuitry. The acquiring circuitry is configured to acquire, from a water heater, information regarding the water heater including a demand for hot water and acquire information such as weather data and a charge for electricity. The delivery schedule creating circuitry includes circuitry for deducing the state of the water heater and delivery schedule determining circuitry. The circuitry for deducing the state of the water heater is configured to deduce the state of the water heater on the basis of a water heater model, and the delivery schedule determining circuitry is configured to create an operation plan for the water heater for a predetermined period on the basis of the deduced state of the water heater to minimize, to the extent possible, charges for heat and electricity.

Patent Literature 2 relates to a heating control system controls a storage type water heater which supplies hot water heated by a heat pump unit to a water heating terminal. A controller of the storage type water heater includes a forecast acquiring section and a plan creating section. The forecast acquiring section acquires weather forecast information. On the basis of the weather forecast information acquired by the forecast acquiring section, a planning section prepares a heating operation plan of the storage type water heater.

Patent Literature 3 relates to a hybrid hot water supply system that includes: a hot water storage tank; a heat pump water heater; a hot water storage determination means which determines whether the hot water storage is a predetermined hot water storage quantity or more; a combustion water heater which supplies hot water to the hot water storage tank when the hot water storage is less than the predetermined hot water storage quantity; a water supply temperature acquisition means; an external air temperature acquisition means; a heating capability acquisition unit which acquires a heating capability of the heat pump water heater at an acquired external air temperature; an arithmetic unit which computes a hot water supply flow rate of the heat pump water heater based on the acquired water supply temperature and heating capability and a hot water supply temperature; and a correction unit which corrects the predetermined hot water storage quantity by increasing or decreasing it based on the hot water supply flow rate.

### Citation List

### Patent Literature

Patent Literature 1: JP 2017 219 249 A
Patent Literature 2: JP 5 121 882 B2
Patent Literature 3: JP 2011 012 940 A

### Summary of Invention

### Technical Problem

However, an object of the operation plan creating apparatus disclosed in Patent Literature 1 is to reduce charges for heat and electricity, and the delivery schedule does not sufficiently reflect a demand for hot water, leading to a possible occurrence of a shortage of hot water supply.

To address issues such as described above, the present disclosure provides a thermal storage system and an information processing apparatus configured to prevent or reduce occurrences of a shortage of hot water supply.

### Solution to Problem

According to the present disclosure, thermal storage systems as defined in the independent claims are provided. Further embodiments of the claimed invention are defined in the dependent claims. Although the claimed invention is only defined by the claims, the below embodiments, examples, and aspects are present for aiding in understanding the background and advantages of the claimed invention.

### Advantageous Effects of Invention

According to an embodiment of the present disclosure, an hourly delivery capacity is forecasted on the basis of the information regarding weather forecast in a region where a water heater has been installed, a demand for hot water is forecasted on the basis of the data indicating past change in consumption of hot water, and an operation schedule that does not cause a shortage of hot water supply is created on the basis of these forecast values. Occurrences of a shortage of hot water supply may be prevented or reduced since the delivery capacity is accurately forecasted on the basis of the information regarding weather forecast in the region where the water heater has been installed, the demand for hot water is accurately forecasted on the basis of how users use hot water, and an optimized possible operation schedule is determined on the basis of these forecast values.

### Brief Description of Drawings

[Fig. 1] Fig. 1 is a block diagram depicting an example of a configuration of a thermal storage system according to Embodiment 1.
[Fig. 2] Fig. 2 is a circuit diagram depicting an example of a configuration of a water heater depicted in Fig. 1.
[Fig. 3] Fig. 3 is a block diagram depicting an example of a configuration of an information providing server depicted in Fig. 1.
[Fig. 4] Fig. 4 depicts an example of information regarding weather forecast provided to an information processing apparatus by the information providing server depicted in Fig. 3.
[Fig. 5] Fig. 5 is a block diagram depicting an example of a configuration of the information processing apparatus depicted in Fig. 1.
[Fig. 6] Fig. 6 depicts an example of a management table depicted in Fig. 5.
[Fig. 7] Fig. 7 is a schematic illustration for describing an example of a method of partitioning a target region into multiple regions in Embodiment 1.
[Fig. 8] Fig. 8 depicts another example of a management table stored in a storage device depicted in Fig. 5.
[Fig. 9] Fig. 9 depicts an example of capacity information stored in the storage device depicted in Fig. 5.
[Fig. 10] Fig. 10 is a chart depicting an example of combinations of a region where the water heater depicted in Fig. 2 has been installed and consumption of hot water from the water heater in Embodiment 1.
[Fig. 11] Fig. 11 is a graph depicting as time series variation a delivery capacity forecasted by supply capacity forecast circuitry depicted in Fig. 5 and consumption of hot water forecasted by demand forecast circuitry depicted in Fig. 5.
[Fig. 12] Fig. 12 is a graph for describing a method by which planning circuitry depicted in Fig. 5 determines an operation schedule on the basis of the graph depicted in Fig. 11.
[Fig. 13] Fig. 13 is a hardware configuration diagram depicting an example of a configuration of a controller depicted in Fig. 5.
[Fig. 14] Fig. 14 is a hardware configuration diagram depicting another example of the configuration of the controller depicted in Fig. 5.
[Fig. 15] Fig. 15 is a sequence chart depicting an operation procedure of the thermal storage system according to Embodiment 1.
[Fig. 16] Fig. 16 is an illustration for describing a process performed by the information processing apparatus according to Embodiment 1 to determine an operation schedule for the water heater.
[Fig. 17] Fig. 17 is a block diagram depicting another example of the configuration of the thermal storage system according to Embodiment 1.
[Fig. 18] Fig. 18 is a block diagram depicting an example of the configuration of the information processing apparatus depicted in Fig. 17.

### Description of Embodiments

### Embodiment 1

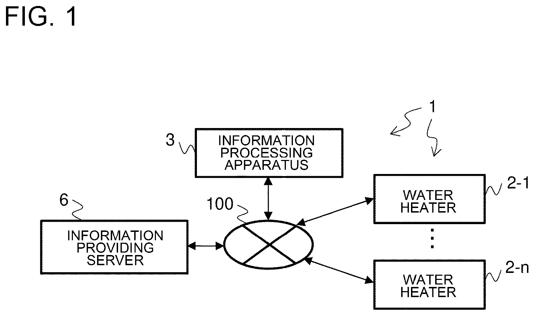

Description will be given with regard to a configuration of a thermal storage system according to Embodiment 1. Fig. 1 is a block diagram depicting an example of a configuration of a thermal storage system according to Embodiment 1. A thermal storage system 1 according to Embodiment 1 includes multiple water heaters 2-1 to 2-n (n is an integer equal to 2 or more) and an information processing apparatus 3 configured to determine operation schedules for the water heaters 2-1 to 2-n. The water heaters 2-1 to 2-n and the information processing apparatus 3 are connected through a network 100. An information providing server 6 configured to provide information regarding weather forecast to the information processing apparatus 3 is connected to the network 100. In Embodiment 1, description will be given with regard to a case where two or more water heaters 2-k (k is any integer from 1 to n) are included, but the number of the water heaters 2-k may be one.

The network 100 is, for example, the Internet. Each of the water heaters 2-1 to 2-n and the information processing apparatus 3 are configured to transmit and receive data to and from each other in accordance with a predetermined communication protocol. The information processing apparatus 3 and the information providing server 6 are configured to transmit and receive data to and from each other in accordance with a predetermined communication protocol. Examples of the communication protocol include transmission control protocol/internet protocol (TCP/IP). The water heaters 2-1 to 2-n, the information processing apparatus 3, and the information providing server 6 are each assigned a different device identifier **ID** in advance. Examples of the device identifier **ID** include an **IP** address. When data is exchanged between two devices connected through the network 100, the IP address representing the destination of the data and the IP address representing the source of the data are set to the header of the data, but the description of the procedure will be omitted below.

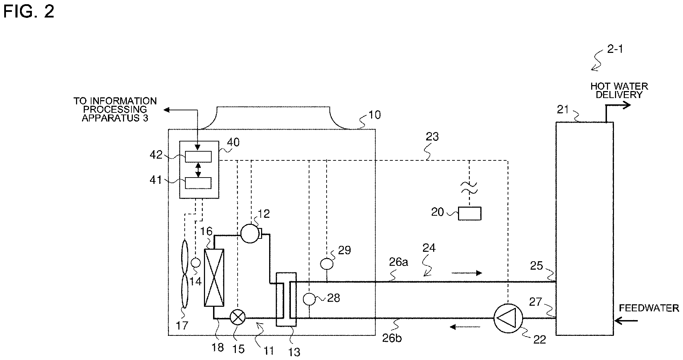

Description will be given with regard to configurations of the water heaters 2-1 to 2-n depicted in Fig. 1. Since the water heaters 2-1 to 2-n have the same configurations, the configuration of the water heater 2-1 will be described herein. Fig. 2 is a circuit diagram depicting an example of a configuration of the water heater depicted in Fig. 1.

As depicted in Fig. 2, the water heater 2-1 includes a heat source unit 10 configured to generate heating energy, a tank 21 formed to store water, a cycle circuit 24 configured to circulate water between the heat source unit 10 and the tank 21, and a delivery controller 40 configured to control operation of the water heater 2-1. The water heater 2-1 is provided with an operation terminal 20 configured to receive a setting temperature Ts from a user. Examples of the operation terminal 20 include a touch panel (not depicted) and a display (not depicted). The operation terminal 20 may include a loudspeaker (not depicted). The operation terminal 20 is connected to the delivery controller 40 through a signal line 23.

The heat source unit 10 serves as a heat pump water heater configured to generate heating energy. The heat source unit 10 includes a compressor 12, a water heat exchanger 13, an expansion valve 15, a heat source side heat exchanger 16, and a fan 17 configured to supply air to the heat source side heat exchanger 16. A refrigerant pipe 18 connects the compressor 12, the water heat exchanger 13, the expansion valve 15, and the heat source side heat exchanger 16, and a refrigerant circuit 11 through which refrigerant circulates is formed. Heating energy generated by the refrigerant circuit 11 is conducted through the water heat exchanger 13 to water circulating through the cycle circuit 24, and the water is heated. The heat source unit 10 is provided with a temperature sensor 14 configured to detect a suction temperature Tin that is the temperature of the air sucked by the fan 17. The compressor 12, the expansion valve 15, the fan 17, and the temperature sensor 14 are connected to the delivery controller 40 through the signal line 23.

The compressor 12 is configured to suck refrigerant at low temperature and low pressure, compress the sucked refrigerant, and discharge the compressed refrigerant at high temperature and high pressure. The compressor 12 is an inverter-type compressor capable of adjusting the capacity by controlling the operation frequency of the motor. The water heat exchanger 13 is a refrigerant-heat-medium heat exchanger that exchanges heat between the refrigerant and the water. The water heat exchanger 13 exchanges heat between the refrigerant and the water and heat the water. The expansion valve 15 is a pressure reducing valve configured to reduce the pressure of the refrigerant and expand the refrigerant. The expansion valve 15 is, for example, an electronic expansion valve with an adjustable opening degree. The heat source side heat exchanger 16 exchanges heat between the refrigerant and the air. The rotation frequency of the motor in the fan 17 is controlled to adjust the amount of air to be supplied to the heat source side heat exchanger 16.

The tank 21 receives water via a feedwater inlet (not depicted) from outside and delivers hot water to a load unit (not depicted) via a delivery outlet (not depicted). The tank 21 is provided with an outlet 27 that is an opening through which water flows from the tank 21 to the water heat exchanger 13 and an inlet 25 that is an opening through which water having passed through the water heat exchanger 13 returns to the tank 21. The inlet 25 of the tank 21 is connected to the water heat exchanger 13 by a pipe 26a, and the outlet 27 of the tank 21 is connected to the water heat exchanger 13 by a pipe 26b.

The cycle circuit 24 includes a circulation pump 22. The circulation pump 22 is installed to the pipe 26b. The circulation pump 22 is a pump configured to send out sucked water to circulate water between the tank 21 and the water heat exchanger 13. The rotation frequency H of the circulation pump 22 is adjustable. The pipes 26a and 26b connect the circulation pump 22, the water heat exchanger 13, and the tank 21, and the cycle circuit 24 through which water circulates is formed. The circulation pump 22 is connected to the delivery controller 40 through the signal line 23.

The pipe 26b is provided with an inlet temperature sensor 28 upstream of the water heat exchanger 13. The pipe 26a is provided with an outlet temperature sensor 29 downstream of the water heat exchanger 13. The inlet temperature sensor 28 is configured to detect an inflow temperature Twin that is the temperature of water flowing into the water heat exchanger 13. The outlet temperature sensor 29 is configured to detect an outflow temperature Twout that is the temperature of water flowing out of the water heat exchanger 13. The inlet temperature sensor 28 and the outlet temperature sensor 29 are connected to the delivery controller 40 through the signal line 23. The inlet temperature sensor 28 and the outlet temperature sensor 29 are each configured to transmit a detected value to the delivery controller 40 via the signal line 23.

Description will be given with regard to the delivery controller 40 depicted in Fig. 2. Examples of the delivery controller 40 include a microcomputer. As depicted in Fig. 2, the delivery controller 40 includes a memory 41 configured to store programs and a processor 42, such as a central processing unit (CPU), configured to execute a process in accordance with the programs stored in the memory 41. The memory 41 is memory circuitry configured to store data indicating change in consumption of hot water from the water heater 2-1. The data indicating change in consumption of hot water represents consumption of hot water per unit time (for example, an hour) as time series variation. The memory 41 is configured to update the stored data indicating change in consumption of hot water at intervals tp1. The interval tp1 is, for example, one week long. In other words, the memory 41 is configured to store the data indicating change in consumption of hot water for a one-week period in Embodiment 1. The memory 41 may be configured to store the data indicating change in consumption of hot water not only for a one-week period but also for a one-day period or for a one-month period.

The delivery controller 40 is configured to receive an operation schedule from the information processing apparatus 3 via the network 100. The delivery controller 40 is configured to retrieve from the memory 41 the data indicating change in consumption of hot water and transmit the data to the information processing apparatus 3 via the network 100 at intervals tp1. The delivery controller 40 is configured to assign, to the data indicating change, the device identifier **ID** of the information processing apparatus 3 indicating the destination and the device identifier **ID** of the water heater 2-1 indicating the source when transmitting the data indicating change to the information processing apparatus 3.

The delivery controller 40 is configured to, on receipt of the operation schedule from the information processing apparatus 3, control in accordance with the operation schedule the operation frequency fc of the compressor 12, the rotation frequency of the fan 17, and the opening degree of the expansion valve 15 on the basis of the inflow temperature Twin, the outflow temperature Twout, and the setting temperature Ts. The tank 21 may be provided with a sensor configured to detect the quantity of the water and a sensor configured to detect the temperature of the water stored in the tank 21.

Description will be given herein with regard to a refrigerant flow in the refrigerant circuit 11 with reference to Fig. 2. Refrigerant sucked into the compressor 12 is compressed by the compressor 12 and is discharged as refrigerant at high temperature and high pressure. The refrigerant discharged from the compressor 12 flows into the water heat exchanger 13. The refrigerant exchanges heat with water circulating in the cycle circuit 24 and is cooled in the water heat exchanger 13. The refrigerant heats the water in this heat exchange. The cooled refrigerant flows into the expansion valve 15. The pressure of the refrigerant is reduced in the expansion valve 15, and the refrigerant is expanded. The refrigerant expanded at a reduced pressure flows into the heat source side heat exchanger 16. The refrigerant exchanges heat with air and is heated in the heat source side heat exchanger 16. The heated refrigerant at low temperature and low pressure is sucked by the compressor 12.

Description will be given with regard to a water flow in the cycle circuit 24 with reference to Fig. 2. Water is sucked from the tank 21 into the circulation pump 22 via the pipe 26b connected to the outlet 27 of the tank 21. The water sucked into the circulation pump 22 flows into the water heat exchanger 13. The water exchanges heat with the refrigerant and is heated in the water heat exchanger 13. The heated water flows into the tank 21 via the pipe 26a.

Next, description will be given with regard to a configuration of the information providing server 6 depicted in Fig. 1. The information providing server 6 is configured to receive information regarding weather forecast from an external information processing apparatus (not depicted) via the network 100 and make the information regarding weather forecast available on the web. Examples of the external information processing apparatus (not depicted) include a computer configured to simulate weather in the future on the basis of multiple pieces of meteorological observation data received from multiple observation locations or observation data received from a meteorological satellite.

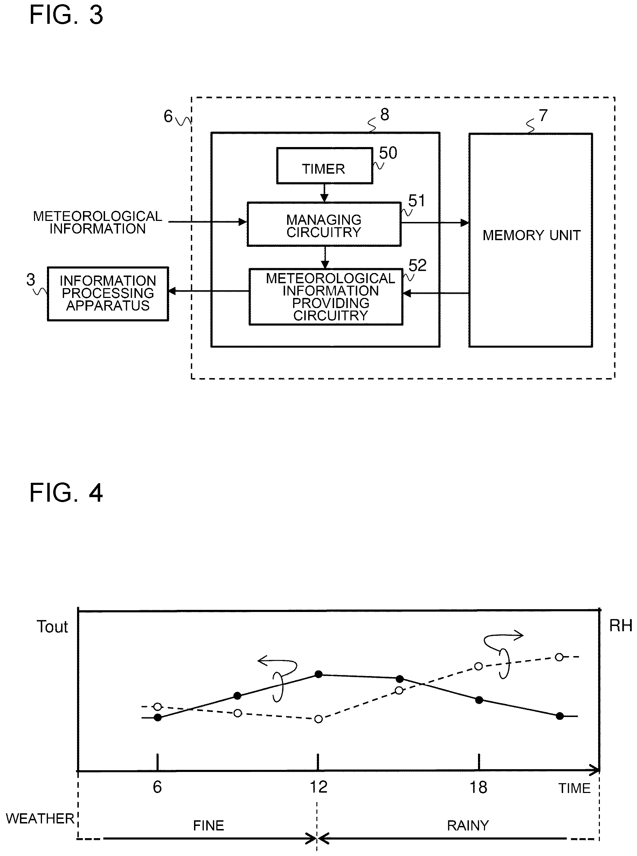

Fig. 3 is a block diagram depicting an example of a configuration of the information providing server depicted in Fig. 1. The information providing server 6 includes a memory unit 7 and an information providing controller 8. Examples of the memory unit 7 include a hard disk drive (HDD). The information providing controller 8 includes a memory (not depicted) configured to store programs and a processor (not depicted) configured to execute a process in accordance with the programs stored in the memory.

The memory unit 7 is configured to store information regarding weather forecast received from an external information processing apparatus (not depicted) via the information providing controller 8. The information providing controller 8 includes a timer 50 configured to measure time, managing circuitry 51, and meteorological information providing circuitry 52. The managing circuitry 51 is configured to receive information regarding weather forecast from the external information processing apparatus (not depicted) via the network 100 and save the information regarding weather forecast to the memory unit 7 at fixed intervals tp2. The interval tp2 at which the managing circuitry 51 receives the information regarding weather forecast from the external information processing apparatus (not depicted) is, for example, 3 hours long. The managing circuitry 51 is configured to receive multiple pieces of information regarding weather forecast with different positional information from the external information processing apparatus (not depicted).

Meteorological information providing circuitry 52 is configured to retrieve the information regarding weather forecast from the memory unit 7 and transmit the information regarding weather forecast to the information processing apparatus 3 at intervals tp2. The information regarding weather forecast contains positional information and meteorological information including an outdoor air temperature Tout [degrees C], an outdoor air humidity RH, and weather information that are forecasted at intervals tp2 starting from the current time. The meteorological information providing circuitry 52 may be configured to transmit multiple pieces of information regarding weather forecast with different positional information to the information processing apparatus 3.

Examples of the positional information include geographical coordinates represented by latitude and longitude. In Embodiment 1, a case is considered where a target region OBR where the water heaters 2-1 to 2-n are installed is located in the northern hemisphere, and the latitude is represented by NL and the longitude is represented by EL. NL represents northern latitude, and EL represents eastern longitude. The outdoor air humidity RH is relative humidity [%]. The weather information is information regarding weather such as fine, cloudy, and rainy. The weather information may be the probability of precipitation [%]. In this case, the weather may be classified into categories such as fine, cloudy, and rainy depending on the probability of precipitation. For example, when the probability of precipitation is less than 30%, the weather is defined as fine, when the probability of precipitation is 30% or more and less than 70%, the weather is defined as cloudy, and when the probability of precipitation is 70% or more, the weather is defined as rainy or snowy.

Fig. 4 depicts an example of the information regarding weather forecast provided to the information processing apparatus by the information providing server depicted in Fig. 3. As depicted in Fig. 4, the information regarding weather forecast contains the outdoor air temperature Tout [degrees C], the outdoor air humidity **RH** [%], and the weather information at 3-hour intervals from 6 a.m. to 21 p.m. The information regarding weather forecast depicted in Fig. 4 indicates that the weather information changes from fine in the morning to rainy in the afternoon. The change in the outdoor air temperature Tout indicates that the temperature starts to increase at around 6 a.m. and decreases in the afternoon. The change in the outdoor air humidity **RH** indicates that the humidity is low in the morning and increases in the afternoon.

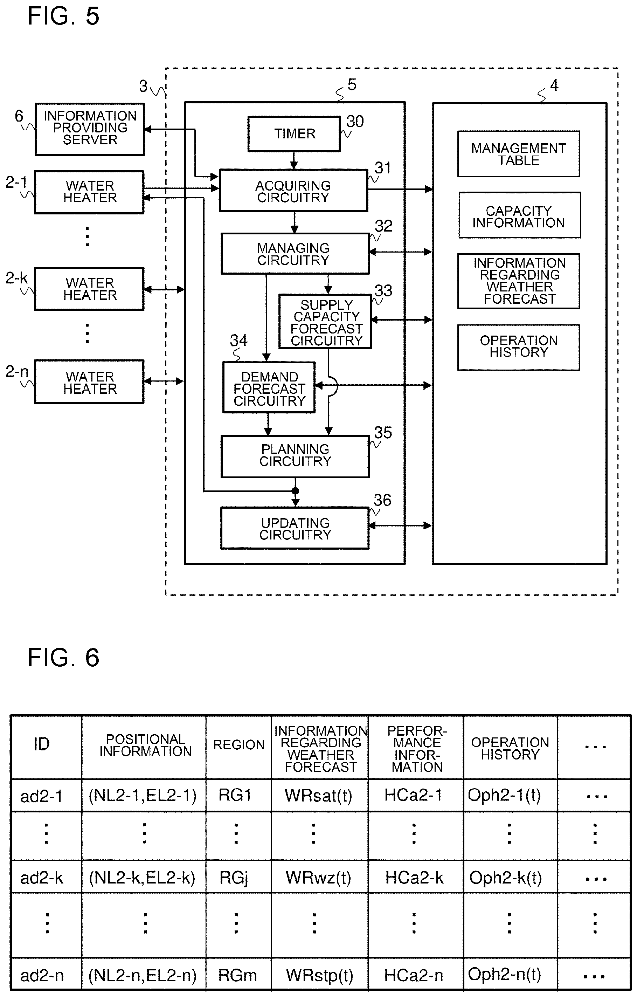

Next, description will be given with regard to a configuration of the information processing apparatus 3 depicted in Fig. 1. Fig. 5 is a block diagram depicting an example of a configuration of the information processing apparatus depicted in Fig. 1. The information processing apparatus 3 includes a storage device 4 and a controller 5. Examples of the storage device 4 include an HDD. Examples of the controller 5 include a microcomputer.

The storage device 4 is memory circuitry configured to store a management table, capacity information, information regarding weather forecast, and an operation history. The management table is a table for managing information regarding each of the water heaters 2-1 to 2-n. The capacity information is used to forecast the delivery capacity of each of the water heaters. The information regarding weather forecast is the information regarding weather forecast in a region where each of the water heaters 2-1 to 2-n is installed. The operation history is data indicating change in consumption of hot water received from the water heaters 2-1 to 2-n. The storage device 4 is configured to store, as the operation history, for example, the data indicating change in consumption of hot water from the water heaters 2-1 to 2-n during the previous one-year period.

Fig. 6 depicts an example of the management table depicted in Fig. 5. For the device identifier **ID** of each of the water heaters 2-1 to 2-n, the management table depicted in Fig. 6 registers the positional information of the water heater, the region to which the water heater belongs, the filename of the information regarding weather forecast, the filename of the performance information, and the filename of the operation history. Since the information regarding weather forecast and the operation history stored in the storage device 4 are updated in succession as time passes, information regarding time (t) is attached to these files, and the latest files may be identified. Fig. 6 depicts a case where the target region OBR is partitioned into multiple regions RG1 to RGm (m is an integer equal to 2 or more). Any integer from 2 to m may be assigned to j in RGj.

The management table depicted in Fig. 6 will be described for the water heater 2-1. The device identifier ID of the water heater 2-1 is ad2-1. The positional information of the water heater 2-1 is represented by geographical coordinates (NL2-1, EL2-1). The geographical coordinates (NL2-1, EL2-1) indicate that the water heater 2-1 is installed at a position identified by the latitude NL2-1 and the longitude EL2-1. The position of the water heater 2-1 belong to the region RG1. The filename of the information regarding weather forecast in the region RG1 to which the water heater 2-1 belongs is WRsat(t). The filename of the performance information of the water heater 2-1 is HCa2-1. The file for storing the data indicating change in consumption of hot water from the water heater 2-1 is named Oph2-1(t).

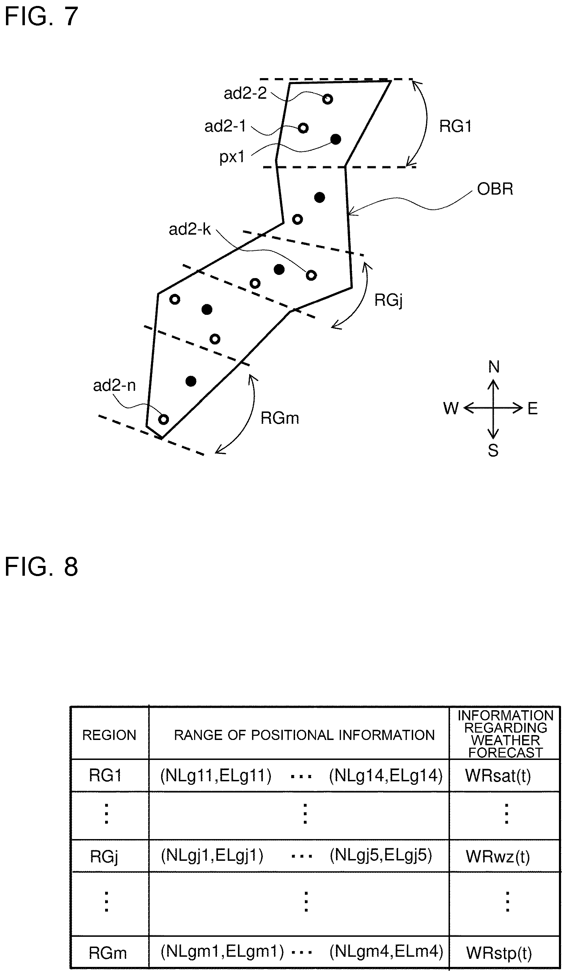

Description will be given herein with regard to an example of a method of partitioning into multiple regions the target region OBR where the water heaters 2-1 to 2-n are installed. Fig. 7 is a schematic illustration for describing an example of a method of partitioning the target region into multiple regions in Embodiment 1.

As depicted in Fig. 7, the target region OBR is partitioned such that the partitioned regions correspond to five climate zones including a subarctic zone, a cool temperature zone, a warm temperature zone, and a subtropical zone from north to south. Open circles depicted in Fig. 7 represent the positions of the water heaters. In Fig. 7, the position of each of the water heaters is denoted by the device identifier ID. Filled circles represent the positions indicated by the positional information contained in the information regarding weather forecast provided to the information processing apparatus 3 by the information providing server 6. For example, the information regarding weather forecast described with reference to Fig. 4 is the information regarding weather forecast at a position px1.

As depicted in Fig. 7, the water heaters 2-1 and 2-2 belong to the same region RG1. The region RG1 is located northernmost among the regions RG1 to RGm. The water heater ad2-n belongs to the region RGm, which is located southernmost. Fig. 7 depicts a case for n = 8 and m = 5.

Fig. 8 depicts another example of the management table stored in the storage device depicted in Fig. 5. Fig. 8 depicts a region management table representing correspondences between the regions depicted in Fig. 7 and the information regarding weather forecast. For the region RGj, the region management table depicted in Fig. 8 registers the range of positional information corresponding to the region RGj and the filename of the information regarding weather forecast to be applied to the region RGj. As depicted in Fig. 8, multiple geographical coordinates are registered as the range of positional information corresponding to the region RGj. A region enclosed by a polygonal line connecting the multiple geographical coordinates in succession is the region RGj. The filename WRsat(t) for the region RG1 is the filename of the latest information regarding weather forecast at the position px1 depicted in Fig. 7.

In Embodiment 1, description has been given with regard to a case where the target region OBR is partitioned into multiple regions such that the partitioned regions correspond to multiple climates, but partitioning into regions may be on the basis of information other than a climate. Partitioning into regions may be on the basis of, for example, address indications according to municipal divisions. When a water heater 2-z (z is an integer more than n) is newly registered in the management table depicted in Fig. 6, the region RGj for the water heater 2-z is registered in the management table together with positional information by a managing operator. In this case, the controller 5 may register the region RGj for the water heater 2-z in the management table depicted in Fig. 6 in response to the input of the positional information of the water heater 2-z to the controller 5 by the managing operator. Description will be given below with regard to this case.

The controller 5 includes a timer 30 configured to measure time, acquiring circuitry 31, managing circuitry 32, supply capacity forecast circuitry 33, demand forecast circuitry 34, planning circuitry 35, and updating circuitry 36. The acquiring circuitry 31 is configured to, upon acquiring information regarding weather forecast from the information providing server 6, save the acquired information regarding weather forecast to the storage device 4. The acquiring circuitry 31 is configured to save to the storage device 4 data indicating change in consumption of hot water received from the water heaters 2-1 to 2-n.

The managing circuitry 32 is configured to, in response to an update to the information regarding weather forecast and the operation history for the water heaters 2-1 to 2-n, register in the management table the filenames of the information regarding weather forecast and the operation history that have been updated. The managing circuitry 32 is also configured to instruct the supply capacity forecast circuitry 33 and the demand forecast circuitry 34 to perform a process of calculation regarding the water heaters 2-1 to 2-n before the start of operation on the target date Dx for which the operation schedule is arranged. For example, the managing circuitry 32 is configured to instruct the supply capacity forecast circuitry 33 and the demand forecast circuitry 34 to perform a process of calculation regarding the water heaters 2-1 to 2-n at 4 a.m. every day.

The managing circuitry 32 is configured to refer to the region management table depicted in Fig. 8 in response to the input of positional information by the managing operator when the water heater 2-z is newly registered in the management table. The managing circuitry 32 is configured to identify the region RGj to which the water heater 2-z belongs on the basis of the positional information that has been input and the region management table. The managing circuitry 32 is configured to add a row for the water heater 2-z and register the positional information and the region RGj for the device identifier ad2-z of the water heater 2-z in the management table depicted in Fig. 6.

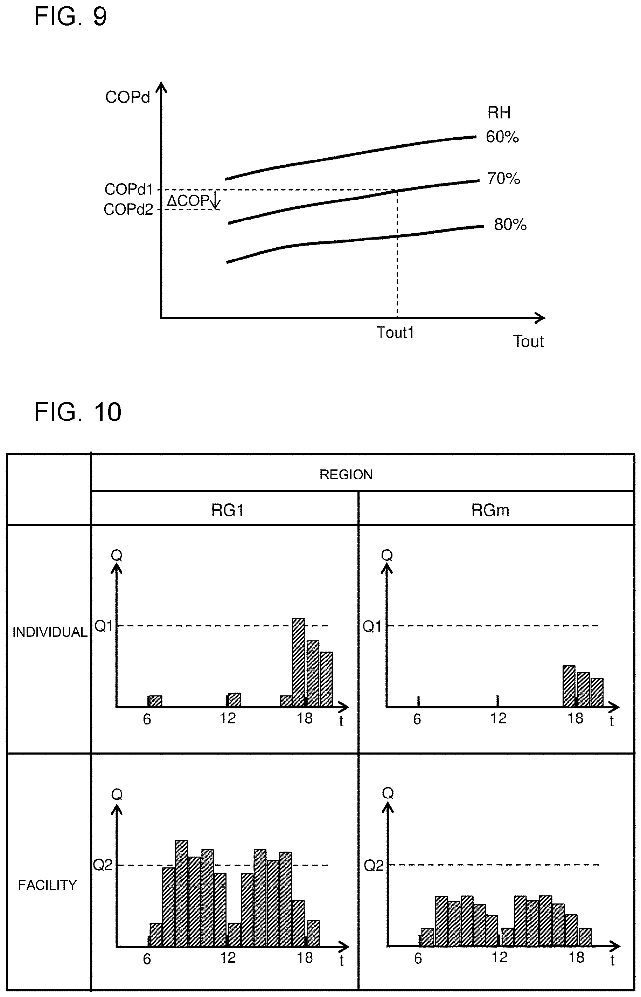

The supply capacity forecast circuitry 33 is configured to determine an hourly delivery capacity of the water heater 2-k on the target date Dx on the basis of the information regarding weather forecast. Description will be given with regard to a specific operation of the supply capacity forecast circuitry 33 with reference to Fig. 9. Fig. 9 depicts an example of capacity information stored in the storage device depicted in Fig. 5. Fig. 9 depicts a capacity chart for determining a delivery capacity as a function of the outdoor air temperature Tout and the outdoor air humidity RH. The vertical axis in Fig. 9 represents a coefficient of performance COPd, and the horizontal axis in Fig. 9 represents the outdoor air temperature Tout. The coefficient of performance COPd is given as follows: COPd ≈ (a delivery capacity Qd/electric power consumption of the compressor [kW]). A quantity to be delivered from the water heater 2-k corresponds to the consumption of hot water by the user, and when the consumption of hot water per unit time is given by Q, the relationship Q ∝ Qd holds.

The supply capacity forecast circuitry 33 is configured to, for the water heater 2-k, refer to the capacity chart stored in the storage device 4 and determine a delivery capacity on the basis of the information regarding the outdoor air temperature and the outdoor air humidity contained in the information regarding weather forecast at the target time for forecast. The supply capacity forecast circuitry 33 is configured to correct the determined delivery capacity by use of the weather information contained in the information regarding weather forecast. For example, the coefficient of performance is equal to COPd1 at the outdoor air temperature Tout1 and the outdoor air humidity **RH** equal to 70% at the target time for forecast. When the weather is rainy at the time, the supply capacity forecast circuitry 33 reduces the coefficient of performance equal to COPd1 by ΔCOP and acquires the coefficient of performance equal to COPd2. Then, the supply capacity forecast circuitry 33 determines the delivery capacity of the water heater 2-k at the target time for forecast on the basis of the coefficient of performance equal to COPd2. In contrast, when the weather is fine, the supply capacity forecast circuitry 33 determines the delivery capacity of the water heater 2-k at the target time for forecast on the basis of the coefficient of performance equal to COPd1.

The demand forecast circuitry 34 is configured to forecast hourly consumption of hot water from the water heater 2-k on the target date Dx on the basis of data indicating past change in consumption of hot water. Description will be given with regard to a specific operation of the demand forecast circuitry 34 with reference to Fig. 10. Fig. 10 is a chart depicting an example of combinations of a region where the water heater depicted in Fig. 2 has been installed and consumption of hot water from the water heater in Embodiment 1.

In the chart depicted in Fig. 10, each column represents a type of a region. In this example, to simplify description, a case is described where there are two types of regions RG1 and RGm. A case is considered where the climate of the region RG1 is subarctic and the climate of the region RGm is subtropical. In the chart depicted in Fig. 10, each row represents a different user of the water heater 2-k. The upper row represents a case where the water heater 2-k is installed in an ordinary home and is denoted by individual. The lower row represents a case where the water heater 2-k is installed in a facility such as a hospital and a nursing home and is denoted by facility. In this example, description will be given with regard to a case where the facility is a nursing home for housing people in need of care.

Each segment presents a graph of change in hourly consumption of hot water Q on the same day of the year, for example, on October 10 from 6 a.m. to 8 p.m. The vertical axis of the graph represents consumption of hot water Q and the horizontal axis of the graph represents time t. In the region RG1, the outdoor air temperature Tout is 11 [degrees C] at noon on October 10. In the region RGm, the outdoor air temperature Tout is 25 [degrees C] at noon on October 10.

First, comparison will be made between the data indicating change in consumption of hot water Q by an individual in the region RG1 and the data indicating change in consumption of hot water Q by an individual in the region RGm in the upper row in Fig. 10. A value Q1 is a reference value for the comparison between the consumption of hot water Q in the two regions. In the region RG1, the ambient temperature further decreases in the evening. Consequently, a user in the region RG1 wants to warm the body in a bath and fills the bathtub with hot water, and the consumption of hot water Q starts to increase at 5 p.m. In contrast, in the region RGm, since the outdoor air temperature Tout is 25 [degrees C] at noon, the outdoor air temperature Tout does not decrease significantly even in the evening. Consequently, a user in the region RGm thinks about taking a shower instead of taking a bath. As a result, the consumption of hot water Q by a user in the region RGm is less than the consumption by a user in the region RG1 after 5 p.m. The consumption of hot water Q per unit time by an individual in the region RG1 sometimes exceeds the reference value Q1, but the consumption of hot water Q per unit time by an individual in the region RGm does not exceed the reference value Q1.

Next, comparison will be made between the data indicating change in consumption of hot water Q in a facility in the region RG1 and the data indicating change in consumption of hot water Q in a facility in the region RGm in the lower row in Fig. 10. A value Q2 is a reference value for the comparison between the consumption of hot water Q in the two regions. The facility in the region RG1 and the facility in the region RGm have similar building scales and house similar numbers of residents.

In the facilities in the region RG1 and the region RGm both, the consumption of hot water Q tends to be large from 7 a.m. to 18 p.m. except for an hour around noon. This is because multiple residents in the facilities wash bodies in succession. In particular, a care recipient sometimes has difficulty in washing the body alone, and the staff in the facility need to support the care recipient. When the staff in the facility starts to wash bodies of multiple care recipients in succession from the afternoon, the task will not end during the day. Thus, since multiple care recipients start to wash their bodies in succession from the morning, the consumption of hot water Q is large from the morning as depicted in Fig. 10.

A comparison between the total consumption of hot water Q in the facility in the region RG1 and in the facility in the region RGm reveals a trend indicating that the total consumption of hot water Q is smaller in the facility in the region RGm than in the facility in the region RG1. This is because, similarly to the case for an individual, the outdoor air temperature Tout is high in the region RGm and a care recipient is likely to stay warm only by taking a shower instead of taking a bath. Consequently, daily consumption of hot water Q is less in the facility in the region RGm than in the facility in the region RG1. The consumption of hot water Q per unit time in the facility in the region RG1 sometimes exceeds the reference value Q2, but the consumption of hot water Q per unit time in the facility in the region RGm does not exceed the reference value Q2.

In this way, the way to use hot water is different in an ordinary family and in a facility, for example, in that a user may take a bath at a desired time in an ordinary family whereas a resident in a facility cannot take a bath except at a predetermined time. In addition, for the same type of users, the way to use hot water differs from region to region. Thus, as described above, the hourly consumption of hot water Q tends to differ as a function of a combination of the region RGj and a user. To handle such a trend, the demand forecast circuitry 34 is configured to forecast hourly consumption of hot water from the water heater 2-k on the target date Dx on the basis of data indicating past change in consumption of hot water. Thus, the hourly consumption of hot water may accurately be forecasted for each region and each user.

The reference values Q1 and Q2 have the relationship Q2 > Q1. When the reference value Q2 is given by Q2 = s1 × Q1, the coefficient s1 increases in proportion to the number of residents in a facility.

The planning circuitry 35 is configured to optimize, to the extent possible, the coefficient of performance for the delivery capacity Qd and determine an operation schedule that avoids shortage of hot water supply on the basis of an hourly delivery capacity and an hourly consumption of hot water, the hourly delivery capacity being calculated for the target date Dx by the supply capacity forecast circuitry 33, the hourly consumption of hot water being forecasted for the target date Dx by the demand forecast circuitry 34. Examples of a shortage of hot water supply include a situation in which hot water in the tank 21 runs out and is not available anymore while a user is taking a shower using hot water with the temperature of hot water set at 38 [degrees C] in the evening. The operation schedule contains hourly information regarding the operation frequency fc of the compressor 12. The planning circuitry 35 is configured to transmit the determined operation schedule to the water heater 2-k.

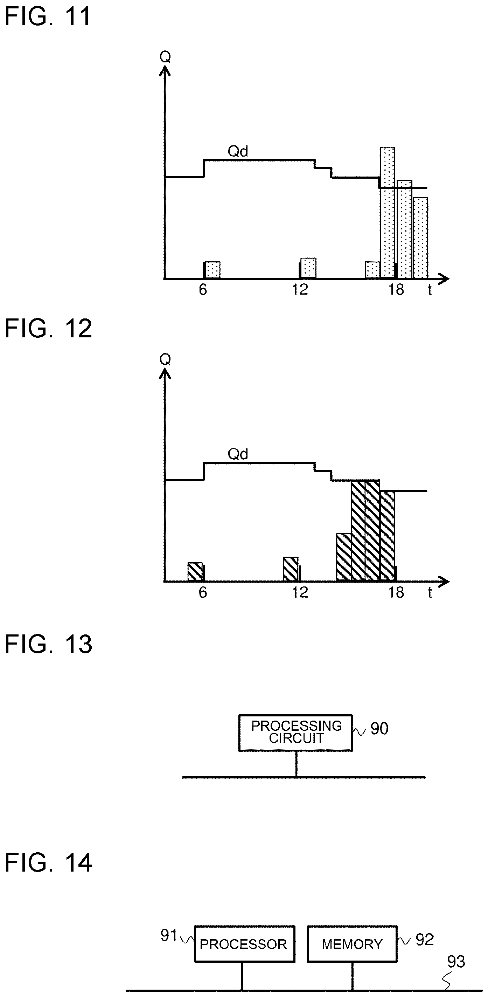

Description will be given with regard to a specific operation for determining an operation schedule by the planning circuitry 35 with reference to Fig. 11 and Fig. 12. Fig. 11 is a graph depicting as time series variation a delivery capacity forecasted by the supply capacity forecast circuitry depicted in Fig. 5 and consumption of hot water forecasted by the demand forecast circuitry depicted in Fig. 5. The vertical axis in Fig. 11 represents consumption of hot water, and the horizontal axis in Fig. 11 represents time. The bar graph represents change in consumption of hot water forecasted by the demand forecast circuitry 34. The line denoted by Qd represents change in the delivery capacity forecasted by the supply capacity forecast circuitry 33 on the basis of the information regarding weather forecast depicted in Fig. 4.

As depicted in Fig. 11, the consumption of hot water forecasted by the demand forecast circuitry 34 exceeds the delivery capacity forecasted by the supply capacity forecast circuitry 33 from 17 p.m. to 19 p.m. Consequently, unless the water heater 2-k starts operating before 17 p.m., a shortage of hot water supply occurs. When the operation frequency fc of the compressor 12 is increased beyond a reasonable level to meet the demand, the delivery capacity Qd sufficient for the electric power consumption of the compressor 12 cannot be obtained, leading to a possible decrease in the coefficient of performance COPd.

Fig. 12 is a graph for describing a method by which the planning circuitry depicted in Fig. 5 determines an operation schedule on the basis of the graph depicted in Fig. 11. The vertical axis in Fig. 12 represents consumption of hot water, and the horizontal axis in Fig. 12 represents time. The line denoted by Qd represents change in the delivery capacity forecasted by the supply capacity forecast circuitry 33. The bar chart represents an operation schedule for maximizing, to the extent possible, the coefficient of performance COPd and avoiding a shortage of hot water supply.

The water heater 2-k of a heat pump type has a low delivery capacity per unit time, and thus hot water needs to be accumulated in the tank 21 before a demand exceeds a supply while the coefficient of performance COPd is being kept optimized possible. As depicted in Fig. 12, the planning circuitry 35 arranges an operation schedule in which the water heater 2-k starts operating at 16 p.m. and the quantity to be delivered does not exceed the delivery capacity Qd that avoids shortage of hot water supply from 16 p.m. to 20 p.m. In this way, the occurrences of a shortage of hot water supply may be prevented or reduced without causing a decrease in the coefficient of performance COPd.

The updating circuitry 36 is configured to, upon receiving the operation schedule from the planning circuitry 35, save the received operation schedule to the storage device 4. The updating circuitry 36 is then configured to receive from the water heater 2-k on the day after the target date Dx the data indicating change in consumption of hot water, compare the received data with the operation schedule stored in the storage device 4 to find the difference between the received data and the operation schedule, and the difference between the received data and the operation schedule is reflected in the data indicating past change in consumption of hot water that the demand forecast circuitry 34 refers to. A specific example will be described herein.

For example, in the example described with reference to Fig. 10, a facility usually has a large number of staff members on a day of the week from Monday to Friday but a small number of staff members on a day of the week from Saturday to Sunday. Thus, the number of care recipients who take a bath in the facility is much smaller on a day of the week from Saturday to Sunday than on a day of the week from Monday to Friday. As a result, consumption of hot water on a day of the week from Saturday to Sunday is greatly reduced compared with consumption of hot water on a day of the week from Monday to Friday. This fact indicates that when the demand forecast circuitry 34 is configured to, in forecasting consumption of hot water, forecast the consumption of hot water on Saturdays or Sundays on the basis of the data indicating past change in consumption of hot water on a day from Monday to Friday, a significant difference occurs between the operation schedule and the actual consumption of hot water.

To solve this problem, the updating circuitry 36 is configured to perform machine learning by referring to the time measured by the timer 30 and daily consumption of hot water in the facility stored in the storage device 4 and determine a period from Sunday to Saturday. The updating circuitry 36 is configured to present suited data indicating change, as the past consumption of hot water, to be used by the demand forecast circuitry 34 for forecast for the day of the week of the target date Dx. For example, when the storage device 4 stores data indicating change in consumption of hot water for at least the previous one-year period, the updating circuitry 36 provides the demand forecast circuitry 34 with the data indicating change in consumption of hot water during a day for the same day of the week as the target date Dx within a week from a date one year before the target date Dx. Since a difference in consumption of hot water according to the day of the week is reflected in the demand forecast, the accuracy of the forecast about the consumption of hot water is improved.

The updating circuitry 36 may apply, to time series variation of the consumption of hot water Q, a probability density function such as an exponential distribution and a normal distribution in a time period including time points before and after a reference time point at which the consumption of hot water Q reaches a maximum possible. For example, the time series variation of the consumption of hot water Q is applied to f(t) = λ e^{-λt} (λ > 0) after the consumption of hot water Q reaches a maximum possible. In this case, the updating circuitry 36 uses machine learning to vary the value of λ such that the value of λ is fitted to the data indicating change in consumption of hot water accumulated in the storage device 4. For a time period in which the user consumes hot water most, instead of the data indicating change in consumption of hot water, which is used by the demand forecast circuitry 34 for forecast, the updating circuitry 36 presents a probability density function with λ being changed to a suited value. In this case, the accuracy of the forecast about the consumption of hot water is also improved.

Description will be given herein with regard to an example of hardware of the controller 5 depicted in Fig. 5. Fig. 13 is a hardware configuration diagram depicting an example of a configuration of the controller depicted in Fig. 5. When various functions of the controller 5 are executed by hardware, the controller 5 depicted in Fig. 5 is formed by a processing circuit 90 as depicted in Fig. 13. Each of the functions of the timer 30, the acquiring circuitry 31, the managing circuitry 32, the supply capacity forecast circuitry 33, the demand forecast circuitry 34, the planning circuitry 35, and the updating circuitry 36 depicted in Fig. 5 is implemented by the processing circuit 90.

When each of the functions is executed by hardware, the processing circuit 90 corresponds to, for example, a single circuit, a compound circuit, a programmed processor, a parallel programmed processor, an application specific integrated circuit (ASIC), a field-programmable gate array (FPGA), or a combination of the foregoing. Each of the functions of the timer 30, the acquiring circuitry 31, the managing circuitry 32, the supply capacity forecast circuitry 33, the demand forecast circuitry 34, the planning circuitry 35, and the updating circuitry 36 may be implemented in a respective processing circuit 90. Alternatively, the functions of the timer 30, the acquiring circuitry 31, the managing circuitry 32, the supply capacity forecast circuitry 33, the demand forecast circuitry 34, the planning circuitry 35, and the updating circuitry 36 may be implemented in a single processing circuit 90.

Description will be given with regard to another example of hardware of the controller 5 depicted in Fig. 5. Fig. 14 is a hardware configuration diagram depicting another example of the configuration of the controller depicted in Fig. 5. When various functions of the controller 5 are executed by software, the controller 5 depicted in Fig. 5 is formed by a processor 91 such as a CPU and a memory 92 as depicted in Fig. 14. Each of the functions of the timer 30, the acquiring circuitry 31, the managing circuitry 32, the supply capacity forecast circuitry 33, the demand forecast circuitry 34, the planning circuitry 35, and the updating circuitry 36 is implemented by the processor 91 and the memory 92. Fig. 14 depicts that the processor 91 and the memory 92 communicatively connected to each other through a bus 93.

When each of the functions is executed by software, the functions of the timer 30, the acquiring circuitry 31, the managing circuitry 32, the supply capacity forecast circuitry 33, the demand forecast circuitry 34, the planning circuitry 35, and the updating circuitry 36 are implemented by software, firmware, or a combination of software and firmware. The software and the firmware are described as programs and stored in the memory 92. The processor 91 is configured to implement the function of each component by loading and executing the programs stored in the memory 92.

When the functions of the timer 30, the acquiring circuitry 31, the managing circuitry 32, the supply capacity forecast circuitry 33, the demand forecast circuitry 34, the planning circuitry 35, and the updating circuitry 36 are executed by software, these components need not be provided in a single hardware configuration. For example, the timer 30, the acquiring circuitry 31, the managing circuitry 32, the planning circuitry 35, and the updating circuitry 36 may be provided in the information processing apparatus 3, and the supply capacity forecast circuitry 33 and the demand forecast circuitry 34 may be provided in a server (not depicted) that is another information processing apparatus connected to the network 100.

A nonvolatile semiconductor memory is used as the memory 92. Examples of such a nonvolatile semiconductor memory include a read only memory (ROM), a flash memory, an erasable and programmable ROM (EPROM), and an electrically erasable and programmable ROM (EEPROM). In addition, a volatile semiconductor memory such as a random access memory (RAM) may be used as the memory 92. Further, a detachable recording medium may be used as the memory 92. Examples of such a detachable recording medium include a magnetic disc, a flexible disc, an optical disc, a compact disc (CD), a mini disc (MD), and a digital versatile disc (DVD).

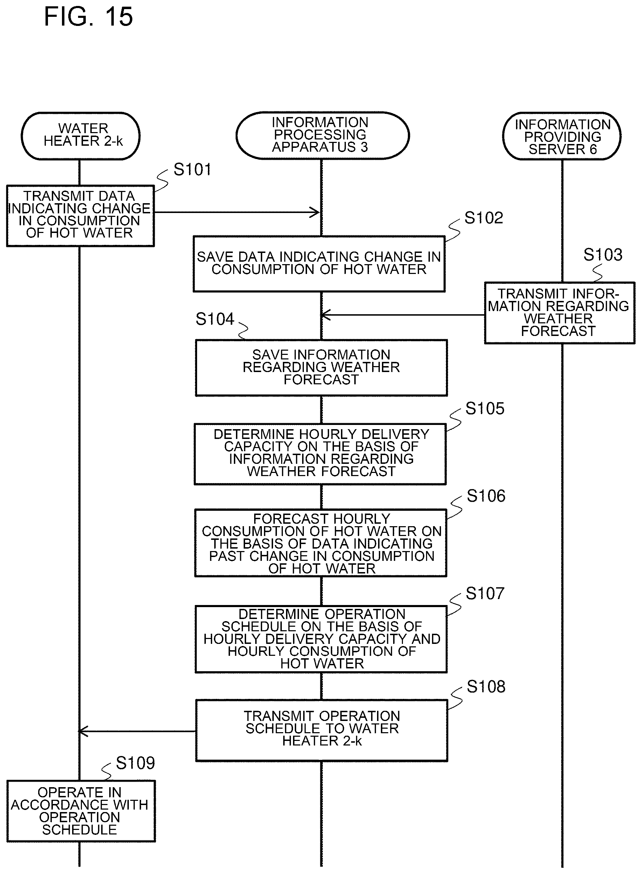

Next, description will be given with regard to operation of the thermal storage system 1 according to Embodiment 1. Fig. 15 is a sequence chart depicting an operation procedure of the thermal storage system according to Embodiment 1. A case of the water heater 2-k will be described herein.

The water heater 2-k transmits data indicating change in consumption of hot water to the information processing apparatus 3 (step S101). When the information processing apparatus 3 receives the data indicating change in consumption of hot water from the water heater 2-k, the acquiring circuitry 31 in the controller 5 saves the data indicating change in consumption of hot water to the storage device 4 (step S102). The information providing server 6 transmits information regarding weather forecast to the information processing apparatus 3 (step S103). When the information processing apparatus 3 receives the information regarding weather forecast from the information providing server 6, the acquiring circuitry 31 in the controller 5 saves the information regarding weather forecast to the storage device 4 (step S104). In step S103, the information providing server 6 need only transmit to the information processing apparatus 3 at least the information regarding weather forecast in a region RGj to which the water heater 2-k belongs.

The supply capacity forecast circuitry 33 determines an hourly delivery capacity of the water heater 2-k on the target date Dx on the basis of the information regarding weather forecast (step S105). The demand forecast circuitry 34 forecasts hourly consumption of hot water from the water heater 2-k on the target date Dx on the basis of data indicating past change in consumption of hot water (step S106). The planning circuitry 35 receives from the supply capacity forecast circuitry 33 the information regarding the forecasted hourly delivery capacity on the target date Dx and receives from the demand forecast circuitry 34 the information regarding the forecasted hourly consumption of hot water on the target date Dx. Then, on the basis of the hourly delivery capacity and the hourly consumption of hot water, the planning circuitry 35 determines an operation schedule that keeps the coefficient of performance for the delivery capacity Qd adequate and that avoids a shortage of hot water supply on the target date Dx (step S107).

The planning circuitry 35 transmits the determined operation schedule to the water heater 2-k (step S108). On receipt of the operation schedule from the information processing apparatus 3, the water heater 2-k starts operating in accordance with the operation schedule (step S109).

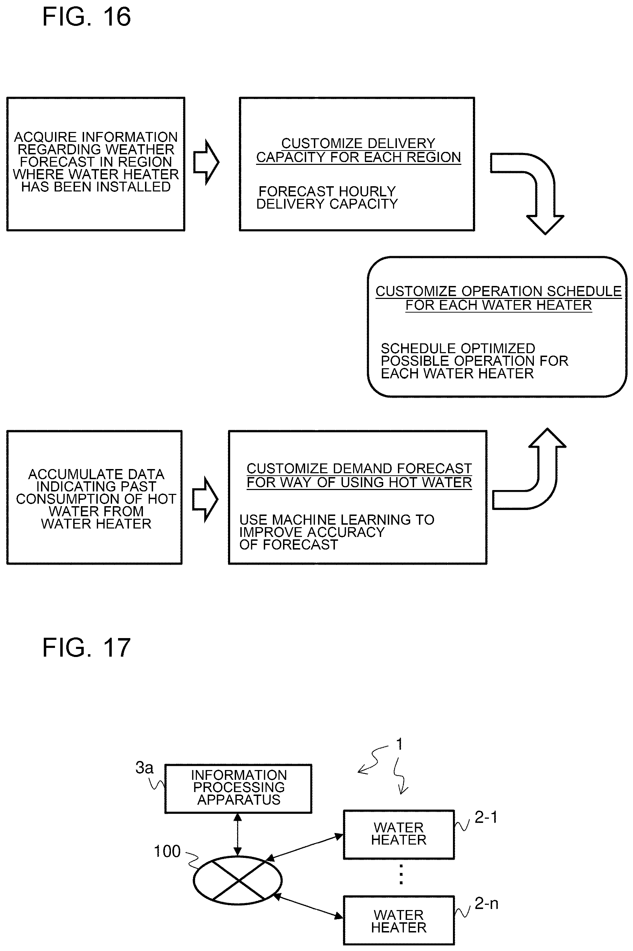

The operation of the thermal storage system 1 has been described in detail with reference to the sequence chart in Fig. 15, and description will be given herein with regard to an overview of a method of determining an operation schedule in Embodiment 1 with reference to Fig. 16. Fig. 16 is an illustration for describing a process performed by the information processing apparatus according to Embodiment 1 to determine an operation schedule for a water heater.

The acquiring circuitry 31 acquires information regarding weather forecast in a region where the water heater has been installed. Since the supply capacity forecast circuitry 33 determines a delivery capacity on the basis of the information regarding weather forecast corresponding to the region, the delivery capacity is customized for each region. The memory 41 in the water heater or the memory circuitry in the storage device 4 accumulates data indicating past consumption of hot water from the water heater. Since the demand forecast circuitry 34 forecasts a demand for hot water on the basis of the data indicating past consumption of hot water from each water heater, a demand forecast is customized for the way of using hot water. Machine learning may be used to improve the accuracy of a demand forecast.

Then, the planning circuitry 35 determines an operation schedule for the water heater on the basis of a forecasted delivery capacity and a forecasted demand for hot water, and the operation schedule is customized for each water heater. In this way, optimized possible operation may be scheduled for each water heater.

In Embodiment 1, the acquiring circuitry 31 may acquire information regarding weather forecast multiple times from the information providing server 6 on the target date Dx. **In** such a case, as time passes, information regarding weather forecast with higher accuracy of forecast is available, and the supply capacity forecast circuitry 33 determines a delivery capacity on the basis of such information regarding weather forecast, improving not only the accuracy of the forecast about a delivery capacity but also the accuracy of an operation schedule.

The thermal storage system 1 according to Embodiment 1 includes the water heater 2-k configured to perform a delivery operation in accordance with an operation schedule and the information processing apparatus 3. The information processing apparatus 3 includes the storage device 4, the acquiring circuitry 31, the supply capacity forecast circuitry 33, the demand forecast circuitry 34, and the planning circuitry 35. The storage device 4 is configured to serve as memory circuitry for storing data indicating past change in consumption of hot water from the water heater 2-k. The acquiring circuitry 31 is configured to acquire information regarding weather forecast for the target date Dx and the region where the water heater 2-k has been installed, the target date Dx being a date for which the operation schedule is arranged. The supply capacity forecast circuitry 33 is configured to determine an hourly delivery capacity of the water heater 2-k on the target date Dx on the basis of the information regarding weather forecast. The demand forecast circuitry 34 is configured to forecast hourly consumption of hot water on the target date Dx on the basis of the data indicating past change in consumption of hot water. The planning circuitry 35 is configured to determine the operation schedule that avoids shortage of hot water supply on the basis of the hourly delivery capacity and the hourly consumption of hot water, the hourly delivery capacity being determined for the target date Dx by the supply capacity forecast circuitry 33, the hourly consumption of hot water being forecasted for the target date Dx by the demand forecast circuitry 34.

According to Embodiment 1, an hourly delivery capacity is forecasted on the basis of information regarding weather forecast in a region where a water heater has been installed, a demand for hot water is forecasted on the basis of data indicating past change in consumption of hot water, and an operation schedule that does not cause a shortage of hot water supply is created on the basis of these forecast values. The delivery capacity is accurately forecasted on the basis of the information regarding weather forecast in the region where the water heater has been installed, the demand for hot water is accurately forecasted on the basis of how users use hot water, and an optimized possible operation schedule is determined on the basis of these forecast values. Consequently, occurrences of a shortage of hot water supply may be prevented or reduced.

### (Modification 1)

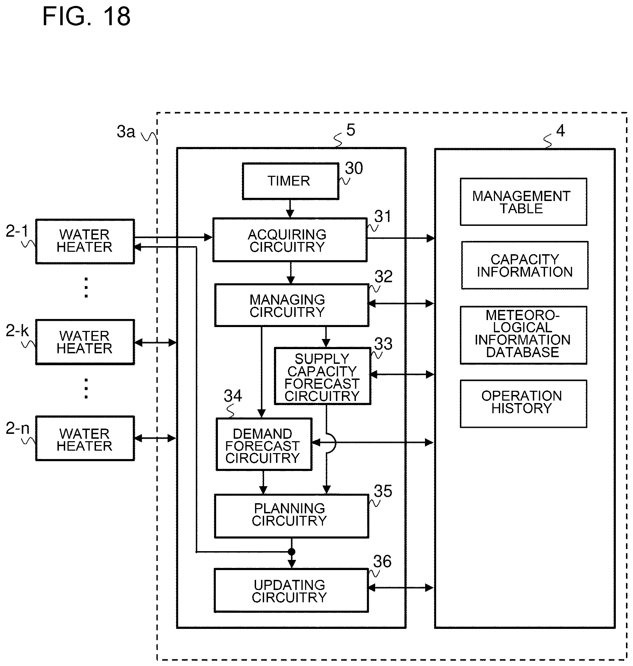

In Modification 1, a meteorological information database is built in the storage device in the information processing apparatus. Fig. 17 is a block diagram depicting another example of the configuration of the thermal storage system according to Embodiment 1. Fig. 18 is a block diagram depicting an example of the configuration of the information processing apparatus depicted in Fig. 17.

As depicted in Fig. 17, in the thermal storage system 1 according to Modification 1, an information processing apparatus 3a is not configured to acquire information regarding weather forecast from the information providing server 6 depicted in Fig. 1. In Modification 1, as depicted in Fig. 18, the meteorological information database is built in the storage device 4 in the information processing apparatus 3a.

Meteorological information in the regions RG1 to RGm at least for the previous one-year period is accumulated in the meteorological information database. The meteorological information contains at least the outdoor air temperature Tout, the outdoor air humidity **RH,** and the weather information. The weather information may be a probability of precipitation. The acquiring circuitry 31 is configured to refer to the meteorological information database at a predetermined time (for example, 4 a.m.) of the target date Dx and retrieve meteorological information in the regions RG1 to RGm on the same date one year before the target date Dx. The acquiring circuitry 31 is configured to designate the retrieved meteorological information in the regions RG1 to RGm as the information regarding weather forecast WRsat(t) to WRstp(t) to be used for a forecast about a delivery capacity by the supply capacity forecast circuitry 33.

When the acquiring circuitry 31 retrieves the meteorological information as the information regarding weather forecast from the meteorological information database, the meteorological information to be retrieved is not limited to the meteorological information on the same date one year before the target date Dx. The acquiring circuitry 31 may retrieve from the meteorological information database meteorological information on predetermined multiple consecutive dates including the same date one year before the target date Dx. The consecutive days are, for example, 3 days to 7 days. The same date one year before the target date Dx may be the first day of the consecutive days, the last day of the consecutive days, or a day of the consecutive days except the first day and the last day. In this case, the acquiring circuitry 31 is configured to calculate respective average values of the outdoor air temperatures Tout, the outdoor air humidities **RH,** and the probabilities of precipitation at the same time on the consecutive days and designate the calculated values as the information regarding weather forecast on the target date Dx.

A specific example will be described with regard to the outdoor air temperature Tout in the meteorological information. A case is considered where consecutive days are 3 days including the same date one year before the target date Dx, the day before, and the day after, and the outdoor air temperatures Tout at 9 a.m. on these 3 days are 15 [degrees C], 17 [degrees C], and 16 [degrees C]. The average value of the 3 outdoor air temperatures Tout is 16 [degrees C]. In this case, the acquiring circuitry 31 is configured to calculate the average value of the 3 outdoor air temperatures Tout in this case and designate the calculated value as the outdoor air temperature Tout at 9 a.m. on the target date Dx in the information regarding weather forecast.

The description has been given with regard to a case where the multiple days are consecutive days including the same date one year before the target date Dx as a reference date, the same dates in the previous several years may be adopted as the multiple days when meteorological information for the previous several years has been accumulated in the meteorological information database. The description has been given as a non-limiting example with regard to a case of calculating respective average values of the outdoor air temperatures Tout, the outdoor air humidities **RH,** and the probabilities of precipitation at a time on multiple days as the information regarding weather forecast, and a statistical method other than calculating the average values may be used for calculation.

In almost all areas on the earth, a meteorological condition is likely to repeat with a one-year period. Thus, the acquiring circuitry 31 need not acquire information regarding weather forecast in the regions RG1 to RGm every day from the information providing server 6 depicted in Fig. 1, and the supply capacity forecast circuitry 33 is able to forecast a delivery capacity by referring to the accumulated meteorological information for the day one year before.

### Embodiment 2

In Embodiment 2, a demand forecast about consumption of hot water is corrected by use of information regarding weather forecast. The same components as are depicted in Embodiment 1 are denoted by the same signs in Embodiment 2 and will not be described in detail. In Embodiment 2, operations that differ from those in Embodiment 1 will be described in detail, and operations that are the same as or similar to those in Embodiment 1 will not be described in detail.

Description will be given with reference to Fig. 5 with regard to a configuration of the information processing apparatus 3 in the thermal storage system 1 according to Embodiment 2. In Embodiment 2, the demand forecast circuitry 34 is configured to correct the data indicating past change in consumption of hot water by use of the information regarding weather forecast for the target date Dx and forecast hourly consumption of hot water on the target date Dx. For example, the demand forecast circuitry 34 is configured to, in response to the information regarding weather forecast, make a correction to decrease or increase the forecasted consumption of hot water by a predetermined quantity of consumption ΔQ.

Using an analysis method such as a regression analysis, a correction to be made by the demand forecast circuitry 34 is derived from a relationship of the data indicating past change in consumption of hot water to any one of the outdoor air temperature, the outdoor air humidity, and the weather information. The regression analysis is not limited to a simple regression analysis. For example, the regression analysis may be a multiple regression analysis involving the data indicating past change in consumption of hot water and the outdoor air temperature, the outdoor air humidity, and the weather information. The regression analysis depends on the type of a facility. Examples of the type of a facility include a hospital, a nursing home, and a facility for providing meals.

For example, a specific example of correction will be described for a water heater installed in a nursing home. When it rains on a day when residents in the facility are supposed to exercise outdoors, the residents cannot exercise outdoors. In such a case, the residents perspire less than on a fine day, and the consumption of hot water is likely to be less than on a fine day. In this case, the demand forecast circuitry 34 decreases by a predetermined quantity of consumption ΔQ the hourly consumption of hot water forecasted on the basis of the data indicating past change in consumption of hot water.

An advantageous effect of Embodiment 2 will be described. A discrepancy sometimes occurs between a demand forecast based on data indicating past change in consumption of hot water and actual consumption of hot water. Such a discrepancy is likely to occur because parameters that affect people's action are not taken into account in a forecast about a demand for hot water. One important parameter is a meteorological condition. The outdoor air temperature, the outdoor air humidity, and the weather information are construed as parameters that greatly affect a demand forecast. For example, when the weather is fine, the weather induces an increase in the amount of perspiration and an increase in the skin temperature of a user staying outdoors. In such a case, the weather is likely to affect the frequency of hot water use, such as taking a shower.

According to Embodiment 2, a value of a demand forecast is corrected in accordance with the meteorological condition such as the outdoor air temperature, which affects people's action. A demand for hot water is expected to increase in a time period when the outdoor air temperature increases and causes people to perspire and in a time period when the outdoor air humidity increases and causes people to feel uncomfortable. Consequently, more accurate forecasts about when consumption of hot water increases because of, for example, filling a bathtub with hot water are possible.

### Embodiment 3

In Embodiment 3, an operation schedule is revised by use of information acquired from a water heater in operation. The same components as are depicted in Embodiment 1 are denoted by the same signs in Embodiment 3 and will not be described in detail. In Embodiment 3, operations that differ from those in Embodiments 1 and 2 will be described in detail, and operations that are the same as or similar to those in Embodiments 1 and 2 will not be described in detail.

Description will be given with reference to Fig. 5 with regard to a configuration of the information processing apparatus 3 in the thermal storage system 1 according to Embodiment 3. The acquiring circuitry 31 is configured to acquire information regarding the suction temperature Tin from the temperature sensor 14 in the water heater 2-k in operation. The supply capacity forecast circuitry 33 is configured to calculate a temperature difference ΔT between the outdoor air temperature Tout contained in the information regarding weather forecast and the suction temperature Tin. The supply capacity forecast circuitry 33 is configured to use the temperature difference ΔT to correct a value of a delivery capacity determined on the basis of the information regarding weather forecast.

A specific example of this correction will be described for a case of the heat source unit 10 being installed in the shade. While the information regarding weather forecast indicates the outdoor air temperature Tout being 15 [degrees C] at 9 a.m., the actual outdoor air temperature at the location where the heat source unit 10 is installed is sometimes lower than 15 [degrees C] and equal to, for example, 10 [degrees C]. In this case, the temperature difference ΔT between the outdoor air temperature Tout and the suction temperature Tin is 5 [degrees C]. Thus, in Embodiment 3, the supply capacity forecast circuitry 33 is configured to make a correction to the value of the delivery capacity determined on the basis of the information regarding weather forecast by use of the temperature difference ΔT = 5 [degrees C] and by reducing the value of the delivery capacity by the temperature difference ΔT. Since the temperature difference ΔT is greatly affected by the environment in which the water heater 2-k is installed, the temperature difference ΔT may be calculated at any time by the supply capacity forecast circuitry 33 as long as the water heater 2-k is in operation.

An advantageous effect of Embodiment 3 will be described. In Embodiments 1 and 2, a delivery capacity is forecasted on the basis of the information regarding weather forecast acquired from the information providing server 6 externally located. However, since the heat source unit 10 may be installed in various environments in real life, the accuracy of forecast may decrease when the outdoor air temperature Tout in the information regarding weather forecast is used without a change to forecast a delivery capacity. Examples of the installation environment that affects the accuracy of the forecast about a delivery capacity include a semibasement room, the vicinity of a vent, a place through which a strong wind blows, and the vicinity of the sea.

A vent is an exhaust opening for discharging heat (for example, an exhaust opening of a kitchen). Since discharged heat is blown to the heat source unit 10 in the vicinity of the vent, the suction temperature Tin is always higher than the outdoor air temperature Tout. The vicinity of the sea means a place in the vicinity of the sea. There are some possible reasons that the vicinity of the sea causes a decrease in the accuracy of the forecast about a delivery capacity. For example, even when the rotation frequency of the fan 17 is kept constant, the wind speed passing through the heat source side heat exchanger 16 changes because of an effect of the sea wind. The sea wind also changes the humidity of the air passing through the heat source side heat exchanger 16. In addition, since salt is likely to corrode metal, the fin of the heat source side heat exchanger 16 corrodes, decreasing the delivery capacity.

In contrast, according to Embodiment 3, the value of the delivery capacity determined on the basis of the information regarding weather forecast is corrected by use of the temperature difference ΔT between the outdoor air temperature Tout contained in the information regarding weather forecast and the suction temperature Tin. Thus, the accuracy of the forecast about the delivery capacity may be improved even in a case where the heat source unit 10 is installed in an environment that decreases the accuracy of the forecast about the delivery capacity.

### Embodiment 4

In Embodiment 4, an operation schedule cannot automatically be determined. The same components as are depicted in Embodiment 1 are denoted by the same signs in Embodiment 4 and will not be described in detail. In Embodiment 4, operations that differ from those in Embodiments 1 to 3 will be described in detail, and operations that are the same as or similar to those in Embodiments 1 to 3 will not be described in detail.

Description will be given with reference to Fig. 5 with regard to a configuration of the information processing apparatus 3 in the thermal storage system 1 according to Embodiment 4. The acquiring circuitry 31 is configured to acquire information regarding the suction temperature Tin from the temperature sensor 14 in the water heater 2-k in operation. The supply capacity forecast circuitry 33 is configured to determine whether the outdoor air temperature Tout contained in information regarding weather forecast is related to the suction temperature Tin and refrain from determining a delivery capacity when the outdoor air temperature Tout is determined to be unrelated to the suction temperature Tin.

For example, when a comparison between the time series variation in the outdoor air temperature Tout and the time series variation in the suction temperature Tin reveals no correlation between them, the outdoor air temperature Tout is determined to be unrelated to the suction temperature Tin. A correlation is determined to exist according to whether the absolute value of the correlation coefficient is equal to a predetermined threshold or more. For example, when the heat source unit 10 is installed indoors, the outdoor air temperature Tout and the suction temperature Tin are determined to be unrelated.

The planning circuitry 35 is configured to determine an operation schedule on the basis of hourly consumption of hot water on the target date Dx forecasted by the demand forecast circuitry 34 when the supply capacity forecast circuitry 33 determines that the outdoor air temperature Tout is unrelated to the suction temperature Tin. The planning circuitry 35 is configured to send, to the operation terminal 20 of the water heater 2-k, information indicating that the operation schedule has been determined without the delivery capacity being taken into account.

In Embodiment 4, for example, when a user operates the operation terminal 20 to revise the operation schedule, the acquiring circuitry 31 may save the revised portion to the storage device 4. The updating circuitry 36 is configured to incorporate the revised portion into the accumulated data indicating change in consumption of hot water, and the revised portion is reflected in a demand forecast when an operation schedule is arranged next time. Alternatively, the planning circuitry 35 may be configured to directly incorporate the revised portion stored in the storage device 4 into an operation schedule to be arranged next time.

An advantageous effect of Embodiment 4 will be described. In Embodiments 1 and 2, a delivery capacity is forecasted on the basis of the information regarding weather forecast acquired from the information providing server 6 externally located. However, since the heat source unit 10 may be installed in various environments in real life, the accuracy of forecast may decrease when the outdoor air temperature Tout in the information regarding weather forecast is used without a change to forecast a delivery capacity. Examples of the installation environment that affects the accuracy of the forecast about a delivery capacity include a semibasement room, the vicinity of a vent, a place through which a strong wind blows, and the vicinity of the sea. In such a case, when the water heater 2-k continues operation in accordance with an operation schedule automatically arranged, a user is unable to arrange an operation schedule to operate the water heater 2-k in an energy-saving condition.

In contrast, in Embodiment 4, in a case where the heat source unit 10 is installed at places where the air causes a short cycle, such as a semibasement room and the vicinity of a vent, the supply capacity forecast circuitry 33 determines that the outdoor air temperature Tout is unrelated to the suction temperature Tin. Then, the user is informed via the operation terminal 20 that an operation schedule has been determined without the delivery capacity being taken into account. Thus, the user may operate the operation terminal 20 to cancel the operation schedule automatically arranged and arrange an operation schedule independently. Consequently, the water heater 2-k may be operated in an energy-saving condition.

### Reference Signs List

1: thermal storage system, 2-1 to 2-n: water heater, 3, 3a: information processing apparatus, 4: storage device, 5: controller, 6: information providing server, 7: memory unit, 8: information providing controller, 10: heat source unit, 11: refrigerant circuit, 12: compressor, 13: water heat exchanger, 14: temperature sensor, 15: expansion valve, 16: heat source side heat exchanger, 17: fan, 18: refrigerant pipe, 20: operation terminal, 21: tank, 22: circulation pump, 23: signal line, 24: cycle circuit, 25: inlet, 26a, 26b: pipe, 27: outlet, 28: inlet temperature sensor, 29: outlet temperature sensor, 30: timer, 31: acquiring circuitry, 32: managing circuitry, 33: supply capacity forecast circuitry, 34: demand forecast circuitry, 35: planning circuitry, 36: updating circuitry, 40: delivery controller, 41: memory, 42: processor, 50: timer, 51: managing circuitry, 52: meteorological information providing circuitry, 90: processing circuit, 91: processor, 92: memory, 93: bus, 100: network

## Claims

1. A thermal storage system (1) comprising:
a water heater (2-1 to 2-n) configured to perform delivery operation in accordance with an operation schedule;
memory circuitry (4) configured to store data indicating past change in consumption of hot water from the water heater (2-1 to 2-n);
acquiring circuitry (31) configured to acquire information regarding weather forecast for a target date and a region where the water heater (2-1 to 2-n) has been installed, the target date being a date for which the operation schedule is arranged;
supply capacity forecast circuitry (33) configured to determine an hourly delivery capacity of the water heater (2-1 to 2-n) on the target date on the basis of the information regarding weather forecast;
demand forecast circuitry (34) configured to forecast hourly consumption of hot water on the target date on the basis of the data indicating past change in consumption of hot water; and
planning circuitry (35) configured to determine the operation schedule that avoids shortage of hot water supply on the basis of the hourly delivery capacity and the hourly consumption of hot water, the hourly delivery capacity being determined for the target date by the supply capacity forecast circuitry (33), the hourly consumption of hot water being forecasted for the target date by the demand forecast circuitry (34),
**characterized in that** the water heater (2-1 to 2-n) includes a heat source side heat exchanger (16), a fan (17) configured to supply air to the heat source side heat exchanger (16), and a temperature sensor (14) configured to detect a suction temperature being a temperature of air sucked by the fan (17),
the acquiring circuitry (31) is configured to acquire information regarding the suction temperature from the temperature sensor (14) in the water heater (2-1 to 2-n) in operation, and
the supply capacity forecast circuitry (33) is configured to calculate a temperature difference between outdoor air temperature and the suction temperature and correct by use of the temperature difference a value of the delivery capacity determined on the basis of the information regarding weather forecast, the outdoor air temperature being contained in the information regarding weather forecast acquired by the acquiring circuitry (31).

2. A thermal storage system (1) comprising:
a water heater (2-1 to 2-n) configured to perform delivery operation in accordance with an operation schedule;
memory circuitry (4) configured to store data indicating past change in consumption of hot water from the water heater (2-1 to 2-n);
acquiring circuitry (31) configured to acquire information regarding weather forecast for a target date and a region where the water heater (2-1 to 2-n) has been installed, the target date being a date for which the operation schedule is arranged;
supply capacity forecast circuitry (33) configured to determine an hourly delivery capacity of the water heater (2-1 to 2-n) on the target date on the basis of the information regarding weather forecast;
demand forecast circuitry (34) configured to forecast hourly consumption of hot water on the target date on the basis of the data indicating past change in consumption of hot water; and
planning circuitry (35) configured to determine the operation schedule that avoids shortage of hot water supply on the basis of the hourly delivery capacity and the hourly consumption of hot water, the hourly delivery capacity being determined for the target date by the supply capacity forecast circuitry (33), the hourly consumption of hot water being forecasted for the target date by the demand forecast circuitry (34),
**characterized in that** the water heater (2-1 to 2-n) includes a heat source side heat exchanger (16), a fan (17) configured to supply air to the heat source side heat exchanger (16), and a temperature sensor (14) configured to detect a suction temperature being a temperature of air sucked by the fan (17),
the acquiring circuitry (31) is configured to acquire information regarding the suction temperature from the temperature sensor (14) in the water heater (2-1 to 2-n) in operation,
the supply capacity forecast circuitry (33) is configured to determine whether outdoor air temperature is related to the suction temperature and refrain from determining the delivery capacity when the outdoor air temperature is determined to be unrelated to the suction temperature, the outdoor air temperature being contained in the information regarding weather forecast acquired by the acquiring circuitry (31), and
the planning circuitry (35) is configured to, when the supply capacity forecast circuitry (33) determines that the outdoor air temperature is unrelated to the suction temperature, determine the operation schedule on the basis of the hourly consumption of hot water forecasted for the target date by the demand forecast circuitry (34) and send, to an operation terminal of the water heater (2-1 to 2-n), information indicating that the operation schedule has been determined without the delivery capacity being taken into account.

3. The thermal storage system (1) of claim 1 or 2, wherein the demand forecast circuitry (34) is configured to correct the data indicating past change in consumption of hot water by use of the information regarding weather forecast for the target date and forecast the hourly consumption of hot water on the target date.

4. The thermal storage system (1) of any one of claims 1 to 3,
wherein the memory circuitry (4) is configured to store a capacity chart for determining the delivery capacity on the basis of outdoor air temperature and outdoor air humidity,
the acquiring circuitry (31) is configured to acquire the information regarding weather forecast containing the outdoor air temperature, the outdoor air humidity, and weather information, and
the supply capacity forecast circuitry (33) is configured to refer to the capacity chart stored by the memory circuitry (4), determine the delivery capacity on the basis of information regarding the outdoor air temperature and the outdoor air humidity contained in the information regarding weather forecast acquired by the acquiring circuitry (31), and correct the determined delivery capacity by use of the weather information contained in the information regarding weather forecast.

5. The thermal storage system (1) of any one of claims 1 to 4,
wherein the memory circuitry (4) is configured to store meteorological information during at least a previous one-year period in a region where the water heater (2-1 to 2-n) has been installed, and
the acquiring circuitry (31) is configured to acquire from the memory circuitry (4), as the information regarding weather forecast, the meteorological information for a date one year before the target date or the meteorological information for a plurality of past dates predetermined by use of as a reference date a same date one year before the target date.

6. The thermal storage system (1) of any one of claims 1 to 4, wherein the acquiring circuitry (31) is configured to acquire the information regarding weather forecast from a server (6) connected to the acquiring circuitry (31) via a network (100).

## Patentansprüche

1. Wärmespeichersystem (1), das aufweist:
einen Wassererwärmer (2-1 bis 2-n), der eingerichtet ist, einen Liefervorgang gemäß einem Betriebsplan durchzuführen;
eine Speicherschaltung (4), die eingerichtet ist, Daten zu speichern, die eine vergangene Veränderung eines Verbrauchs von heißem Wasser von dem Wassererwärmer (2-1 bis 2-n) anzeigen;
eine Erfassungsschaltung (31), die eingerichtet ist, eine Information hinsichtlich einer Wettervorhersage für ein Zieldatum und eine Region zu erfassen, wo der Wassererwärmer (2-1 bis 2-n) installiert wurde, wobei das Zieldatum ein Datum ist, für das der Betriebsplan angelegt ist;
eine Versorgungskapazitäts-Vorhersageschaltung (33), die eingerichtet ist, eine stündliche Lieferkapazität des Wassererwärmers (2-1 bis 2-n) am Zieldatum basierend auf der Information hinsichtlich einer Wettervorhersage zu bestimmen;
eine Bedarfsvorhersageschaltung (34), die eingerichtet ist, einen stündlichen Verbrauch von heißem Wasser am Zieldatum basierend auf den Daten vorherzusagen, die eine vergangene Veränderung eines Verbrauchs von heißem Wasser angeben; und
einen Planungsschaltung (35), die eingerichtet ist, den Betriebsplan zu bestimmen, der eine Verknappung einer Heißwasserversorgung basierend auf der stündlichen Lieferkapazität und dem stündlichen Verbrauch von heißem Wasser vermeidet, wobei die stündliche Lieferkapazität für das Zieldatum durch die Versorgungskapazitäts-Vorhersageschaltung (33) bestimmt wird, wobei der stündliche Verbrauch von heißem Wasser für das Zieldatum durch die Bedarfsvorhersageschaltung (34) vorhergesagt wird,
**dadurch gekennzeichnet, dass**
der Wassererwärmer (2-1 bis 2-n) einen wärmequellenseitigen Wärmetauscher (16), einen Lüfter (17), der eingerichtet ist, Luft an den wärmequellenseitigen Wärmetauscher (16) zu speisen, und einen Temperatursensor (14) umfasst, der eingerichtet ist, eine Ansaugtemperatur zu erfassen, die eine Temperatur von durch den Lüfter (17) angesaugter Luft ist,
die Erfassungsschaltung (31) eingerichtet ist, eine Information hinsichtlich der Ansaugtemperatur von dem Temperatursensor (14) in dem Wassererwärmer (2-1 bis 2-n) im Betrieb zu erfassen, und
die Versorgungskapazitäts-Vorhersageschaltung (33) eingerichtet ist, eine Temperaturdifferenz zwischen einer Außenlufttemperatur und der Ansaugtemperatur zu berechnen und zu korrigieren unter Verwendung der Temperaturdifferenz eines Werts der Lieferkapazität, die basierend auf der Information hinsichtlich einer Wettervorhersage bestimmt wird, wobei die Außenlufttemperatur in der Information hinsichtlich einer Wettervorhersage enthalten ist, die durch die Erfassungsschaltung (31) erfasst wird.

2. Wärmespeichersystem (1), das aufweist:
einen Wassererwärmer (2-1 bis 2-n), der eingerichtet ist, einen Liefervorgang gemäß einem Betriebsplan durchzuführen;
eine Speicherschaltung (4), die eingerichtet ist, Daten zu speichern, die eine vergangene Veränderung eines Verbrauchs von heißem Wasser von dem Wassererwärmer (2-1 bis 2-n) angeben;
eine Erfassungsschaltung (31), die eingerichtet ist, eine Information hinsichtlich einer Wettervorhersage für ein Zieldatum und eine Region zu erfassen, wo der Wassererwärmer (2-1 bis 2-n) installiert wurde, wobei das Zieldatum ein Datum ist, für welches der Betriebsplan angelegt ist;
eine Versorgungskapazitäts-Vorhersageschaltung (33), die eingerichtet ist, eine stündliche Lieferkapazität des Wassererwärmers (2-1 bis 2-n) am Zieldatum basierend auf der Information hinsichtlich einer Wettervorhersage zu bestimmen;
eine Bedarfsvorhersageschaltung (34), die eingerichtet ist, einen stündlichen Verbrauch von heißem Wasser am Zieldatum basierend auf den Daten vorherzusagen, die eine vergangene Veränderung eines Verbrauchs von heißem Wasser angeben; und
eine Planungsschaltung (35), die eingerichtet ist, den Betriebsplan zu bestimmen, der eine Verknappung einer Heißwasserversorgung basierend auf der stündlichen Versorgungskapazität und dem stündlichen Verbrauch von heißem Wasser vermeidet, wobei die stündliche Lieferkapazität für das Zieldatum durch die Versorgungskapazitäts-Vorhersageschaltung (33) bestimmt wird, wobei der stündliche Verbrauch von heißem Wasser für das Zieldatum durch die Bedarfsvorhersageschaltung (34) vorhergesagt wird,
**dadurch gekennzeichnet, dass**
der Wassererwärmer (2-1 bis 2-n) einen wärmequellenseitigen Wärmetauscher (16), einen Lüfter (17), der eingerichtet ist, Luft an den wärmequellenseitigen Wärmetauscher (16) zu speisen, und einen Temperatursensor (14) umfasst, der eingerichtet ist, eine Ansaugtemperatur zu erfassen, die eine Temperatur von durch den Lüfter (17) angesaugter Luft ist,
die Erfassungsschaltung (31) eingerichtet ist, eine Information hinsichtlich der Ansaugtemperatur von dem Temperatursensor (14) in dem Wassererwärmer (2-1 bis 2-n) im Betrieb zu erfassen,
die Versorgungskapazitäts-Vorhersageschaltung (33) eingerichtet ist, zu bestimmen, ob eine Außenlufttemperatur mit der Ansaugtemperatur in Bezug steht, und von einer Bestimmung der Lieferkapazität abzusehen, wenn es bestimmt wird, dass die Außenlufttemperatur nicht mit der Ansaugtemperatur in Bezug steht, wobei die Außenlufttemperatur in der Information hinsichtlich einer Wettervorhersage enthalten ist, die durch die Erfassungsschaltung (31) erfasst wird, und
die Planungsschaltung (35) eingerichtet ist, wenn die Versorgungskapazitäts-Vorhersageschaltung (33) bestimmt, dass die Außenlufttemperatur nicht in Bezug zur Ansaugtemperatur steht, den Betriebsplan basierend auf dem stündlichen Verbrauch von heißem Wasser zu bestimmen, der für das Zieldatum durch die Bedarfsvorhersageschaltung (34) vorhergesagt wird, und eine Information an ein Betriebsendgerät des Wassererwärmers (2-1 bis 2-n) zu senden, die angibt, dass der Betriebsplan ohne Berücksichtigung der Lieferkapazität bestimmt wurde.

3. Wärmespeichersystem (1) nach Anspruch 1 oder 2, wobei die Bedarfsvorhersageschaltung (34) eingerichtet ist, die Daten zu korrigieren, die eine vergangene Veränderung eines Verbrauchs von heißem Wasser unter Verwendung der Information hinsichtlich einer Wettervorhersage für das Zieldatum angeben, und den stündlichen Verbrauch von heißem Wasser am Zieldatum vorherzusagen.

4. Wärmespeichersystem (1) nach einem der Ansprüche 1 bis 3, wobei
die Speicherschaltung (4) eingerichtet ist, ein Kapazitätsdiagramm zum Bestimmen der Lieferkapazität basierend auf einer Außenlufttemperatur und einer Außenluftfeuchtigkeit zu speichern,
die Erfassungsschaltung (31) eingerichtet ist, die Information hinsichtlich einer Wettervorhersage zu erfassen, die die Außenlufttemperatur, die Außenluftfeuchtigkeit, und eine Wetterinformation enthält, und
die Versorgungskapazitäts-Vorhersageschaltung (33) eingerichtet ist, sich auf das Kapazitätsdiagramm zu beziehen, das durch die Speicherschaltung (4) gespeichert wird, die Lieferkapazität basierend auf einer Information hinsichtlich der Außenlufttemperatur und der Außenluftfeuchtigkeit zu bestimmen, die in der Information hinsichtlich einer Wettervorhersage enthalten sind, die durch die Erfassungsschaltung (31) erfasst wird, und die bestimmte Lieferkapazität unter Verwendung der Wetterinformation zu korrigieren, die in der Information hinsichtlich einer Wettervorhersage enthalten ist.

5. Wärmespeichersystem (1) nach einem der Ansprüche 1 bis 4, wobei
die Speicherschaltung (4) eingerichtet ist, eine meteorologische Information während zumindest einer Dauer eines vergangenen Jahres in einer Region zu speichern, wo der Wassererwärmer (2-1 bis 2-n) installiert wurde, und
die Erfassungsschaltung (31) eingerichtet ist, von der Speicherschaltung (4), als die Information hinsichtlich einer Wettervorhersage, die meteorologische Information für ein Datum zu erfassen, das ein Jahr vor dem Zieldatum liegt, oder die meteorologische Information für eine Vielzahl von vergangenen Daten zu erfassen, die durch eine Verwendung als Referenzdatum eines gleichen Datums ein Jahr vor dem Zieldatum vorbestimmt sind.

6. Wärmespeichersystem (1) nach einem der Ansprüche 1 bis 4, wobei die Erfassungsschaltung (31) eingerichtet ist, die Information hinsichtlich einer Wettervorhersage von einem Server (6) zu erfassen, der mit der Erfassungsschaltung (31) über ein Netzwerk (100) verbunden ist.

## Revendications

1. Système de stockage thermique (1) comprenant :
un chauffe-eau (2-1 à 2-n) configuré pour réaliser une opération de distribution conformément à un programme d'opération ;
une circuiterie de mémoire (4) configurée pour stocker des données indiquant des changements passés de consommation d'eau chaude du chauffe-eau (2-1 à 2-n) ;
une circuiterie d'acquisition (31) configurée pour acquérir des informations concernant les prévisions météorologiques pour une date cible et une région où le chauffe-eau (2-1 à 2-n) a été installé, la date cible étant une date pour laquelle le programme d'opération est organisé ;
une circuiterie de prévision de capacité d'approvisionnement (33) configurée pour déterminer une capacité de distribution horaire du chauffe-eau (2-1 à 2-n) à la date cible sur la base des informations concernant les prévisions météorologiques ;
une circuiterie de prévision de la demande (34) configurée pour prévoir une consommation horaire d'eau chaude à la date cible sur la base des données indiquant un changement passé de consommation d'eau chaude ; et
une circuiterie de planification (35) configurée pour déterminer le programme d'opération qui évite une pénurie d'approvisionnement en eau chaude sur la base de la capacité de distribution horaire et de la consommation horaire d'eau chaude, la capacité de distribution horaire étant déterminée pour la date cible par la circuiterie de prévision de capacité d'approvisionnement (33), la consommation horaire d'eau chaude étant prévue pour la date cible par la circuiterie de prévision de la demande (34),
**caractérisé en ce que** le chauffe-eau (2-1 à 2-n) comporte un échangeur de chaleur côté source de chaleur (16), un ventilateur (17) configuré pour approvisionner de l'air à l'échangeur de chaleur côté source de chaleur (16), et un capteur de température (14) configuré pour détecter une température d'aspiration comme étant une température de l'air aspiré par le ventilateur (17),
la circuiterie d'acquisition (31) est configurée pour acquérir des informations concernant la température d'aspiration auprès du capteur de température (14) dans le chauffe-eau (2-1 à 2-n) en fonctionnement, et
la circuiterie de prévision de capacité d'approvisionnement (33) est configurée pour calculer une différence de température entre une température de l'air extérieur et la température d'aspiration et corriger, en utilisant la différence de température, une valeur de la capacité de distribution déterminée sur la base des informations concernant les prévisions météorologiques, la température de l'air extérieur étant contenue dans les informations concernant les prévisions météorologiques acquises par la circuiterie d'acquisition (31).

2. Système de stockage thermique (1) comprenant :
un chauffe-eau (2-1 à 2-n) configuré pour réaliser une opération de distribution conformément à un programme d'opération ;
une circuiterie de mémoire (4) configurée pour stocker des données indiquant des changements passés de consommation d'eau chaude du chauffe-eau (2-1 à 2-n) ;
une circuiterie d'acquisition (31) configurée pour acquérir des informations concernant les prévisions météorologiques pour une date cible et une région où le chauffe-eau (2-1 à 2-n) a été installé, la date cible étant une date pour laquelle le programme d'opération est organisé ;
une circuiterie de prévision de capacité d'approvisionnement (33) configurée pour déterminer une capacité de distribution horaire du chauffe-eau (2-1 à 2-n) à la date cible sur la base des informations concernant les prévisions météorologiques ;
une circuiterie de prévision de la demande (34) configurée pour prévoir une consommation horaire d'eau chaude à la date cible sur la base des données indiquant un changement passé de consommation d'eau chaude ; et
une circuiterie de planification (35) configurée pour déterminer le programme d'opération qui évite une pénurie d'approvisionnement en eau chaude sur la base de la capacité de distribution horaire et de la consommation horaire d'eau chaude, la capacité de distribution horaire étant déterminée pour la date cible par la circuiterie de prévision de capacité d'approvisionnement (33), la consommation horaire d'eau chaude étant prévue pour la date cible par la circuiterie de prévision de la demande (34),
**caractérisé en ce que** le chauffe-eau (2-1 à 2-n) comporte un échangeur de chaleur côté source de chaleur (16), un ventilateur (17) configuré pour approvisionner de l'air à l'échangeur de chaleur côté source de chaleur (16), et un capteur de température (14) configuré pour détecter une température d'aspiration comme étant une température de l'air aspiré par le ventilateur (17),
la circuiterie d'acquisition (31) est configurée pour acquérir des informations concernant la température d'aspiration auprès du capteur de température (14) dans le chauffe-eau (2-1 à 2-n) en fonctionnement,
la circuiterie de prévision de capacité d'approvisionnement (33) est configurée pour déterminer si une température de l'air extérieur est liée à la température d'aspiration et pour s'abstenir de déterminer la capacité de distribution lorsque la température de l'air extérieur est déterminée comme n'étant pas liée à la température d'aspiration, la température de l'air extérieur étant contenue dans les informations concernant les prévisions météorologiques acquises par la circuiterie d'acquisition (31), et
la circuiterie de planification (35) est configurée pour, lorsque la circuiterie de prévision de capacité d'approvisionnement (33) détermine que la température de l'air extérieur n'est pas liée à la température d'aspiration, déterminer le programme d'opération sur la base de la consommation horaire d'eau chaude prévue pour la date cible par la circuiterie de prévision de la demande (34) et envoyer, à un terminal d'opération du chauffe-eau (2-1 à 2-n), des informations indiquant que le programme d'opération a été déterminé sans que la capacité de distribution soit prise en compte.

3. Système de stockage thermique (1) selon la revendication 1 ou 2, dans lequel la circuiterie de prévision de la demande (34) est configurée pour corriger les données indiquant un changement passé de consommation d'eau chaude en utilisant les informations concernant les prévisions météorologiques pour la date cible et prévoir la consommation horaire d'eau chaude à la date cible.

4. Système de stockage thermique (1) selon l'une quelconque des revendications 1 à 3,
dans lequel la circuiterie de mémoire (4) est configurée pour stocker un diagramme de capacité permettant de déterminer la capacité de distribution sur la base d'une température de l'air extérieur et d'une humidité de l'air extérieur,
la circuiterie d'acquisition (31) est configurée pour acquérir les informations concernant les prévisions météorologiques contenant la température de l'air extérieur, l'humidité de l'air extérieur et des informations météorologiques, et
la circuiterie de prévision de capacité d'approvisionnement (33) est configurée pour se référer au diagramme de capacité stocké par la circuiterie de mémoire (4), déterminer la capacité de distribution sur la base des informations concernant la température de l'air extérieur et l'humidité de l'air extérieur contenues dans les informations concernant les prévisions météorologiques acquises par la circuiterie d'acquisition (31), et corriger la capacité de distribution déterminée en utilisant les informations météorologiques contenues dans les informations concernant les prévisions météorologiques.

5. Système de stockage thermique (1) selon l'une quelconque des revendications 1 à 4,
dans lequel la circuiterie de mémoire (4) est configurée pour stocker des informations météorologiques pendant au moins une période passée d'un an dans une région où le chauffe-eau (2-1 à 2-n) a été installé, et
la circuiterie d'acquisition (31) est configurée pour acquérir, auprès de la circuiterie de mémoire (4), en tant qu'informations concernant les prévisions météorologiques, les informations météorologiques pour une date antérieure d'un an à la date cible ou les informations météorologiques pour une pluralité de dates antérieures prédéterminées en utilisant, comme date de référence, une même date antérieure d'un an à la date cible.

6. Système de stockage thermique (1) selon l'une quelconque des revendications 1 à 4, dans lequel la circuiterie d'acquisition (31) est configurée pour acquérir les informations concernant les prévisions météorologiques auprès d'un serveur (6) connecté à la circuiterie d'acquisition (31) par l'intermédiaire d'un réseau (100).
